# EUROPEAN PATENT APPLICATION

(11) **EP 1 681 611 A2**
(43) Date of publication of application: **19.07.2006**
(21) Application number: 05111474.2
(22) Date of filing: 29.11.2005
(51) Int. Cl.: G06F 1/16

(54) **Handheld devices with intuitive page control**

(30) Priority: 12.01.2005 CN 200510004468
(71) Applicant: High Tech Computer Corp., Taoyuan (TW)
(72) Inventor: WANG, John C., Taoyuan, (TW)
(74) Representative: Patentanwälte Kewitz & Kollegen

(57) **Abstract**

A handheld device is disclosed. A processor thereof changes a page shown on a display thereof according to the displacement of the handheld device on a reference plane detected by a sensor.

## Description

### BACKGROUND

The invention relates to electronic devices and, in particular, to handheld devices with intuitive page control capabilities.

Modern integrated circuit (IC) design are used for producing a variety of small and light handheld devices, such as personal digital assistants (PDAs), mobile phones, and other mobile communication devices. Compact handheld devices are portable and convenient to users. However, handheld devices having large displays are convenient to the browsing of users. The design of compact handheld devices is conflicted with the design of handheld devices having large displays.

When a large page (such as an image or a webpage) is displayed on a handheld device for browsing, only a portion of it is shown due to the small display size. Although controls, trackballs, or touch panels can be used to scroll large pages, directions are quite restricted, typically to four or eight directions, thus failing to provide arbitrary direction control.

Trackballs are also inconvenient because several successive moving/scrolling operations through a trackball are required to achieve a long-range progression to desired page portions.

Additionally, some computer applications provide page dragging through touch pads, but multiple successive moving/scrolling operations are also required to achieve a long-range progression.

Consequently, the virtual page movement control on conventional handheld devices is still not an intuitive operation although the described control devices and techniques are provided.

### SUMMARY

Accordingly, handheld devices with an intuitive page control are being described here.

An exemplary embodiment of a handheld device comprises a cover, a memory, a display, a sensor, and a processor that is coupled to these four items. The memory located in the cover stores page information. The display, located on the first surface area of the cover, exhibits the content page in a window. The sensor, located on the second surface area of the cover, detects the distances and the directions of handheld-device movement on a flat surface. The processor changes the content on the display according to the displacement of the handheld device detected by the sensor.

### DESCRIPTION OF THE DRAWINGS

The invention can be understood more comprehensively by reading the subsequent detailed descriptions and examples with references made to the accompanying drawings, wherein:
Fig. 1 is a schematic front view of an exemplary embodiment of the handheld device;
Fig. 2 is a schematic rear view of an exemplary embodiment of the handheld device;
Fig. 3 is a block diagram of a configuration of an exemplary embodiment of the handheld device;
Fig. 4 is a schematic diagram of a virtual page stored in the memory of an exemplary embodiment of the handheld device;
Fig. 5 is a flowchart of intuitive page-shift operations in an exemplary embodiment of the handheld device; and
Figs. 6-9 are schematic diagrams of the operations of an exemplary embodiment of the handheld device.

### DETAILED DESCRIPTION

Handheld devices with intuitive page control can be applied to various computing devices, such as mobile phones, PDAs, game consoles, digital cameras, and other handheld devices.

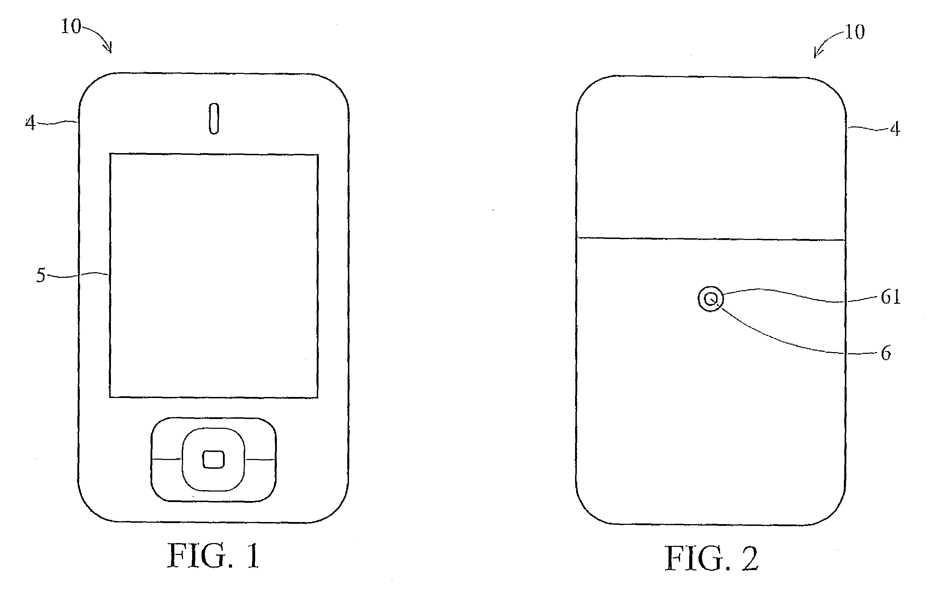

In Fig. 1, handheld device 10 comprises cover 4 with display 5 disposed on a front surface area thereof.

In Fig. 2, sensor 6 is configured on the rear surface area of cover 4 within handheld device 10. The sensor detects the displacement of handheld device 10 relative to a reference plane. Sensor 6 may be an optical sensor, a mechanical sensor, or another type of sensor. If sensor 6 comprises an optical sensor, area 61 on the rear surface of cover 4 may comprise an opening structure through which sensor 6 emits a beam of light to a reference on the reference plane and receives reflective signals. If sensor 6 comprises a mechanical sensor, area 61 on the rear surface of cover 4 may comprise an opening structure through which a ball from sensor 6 contacts the reference plane, so that the ball is driven and rolled by relative motion between handheld device 10 and the reference plane. Sensor 6 accordingly detects the rolling ball for movement and direction thereof. The previously-described optical and mechanical sensors may be implemented as the structure of optical and mechanical sensors within typical computer mice. The rear surface of handheld device 10 can be arranged on a reference plane, such as a tabletop, when operating.

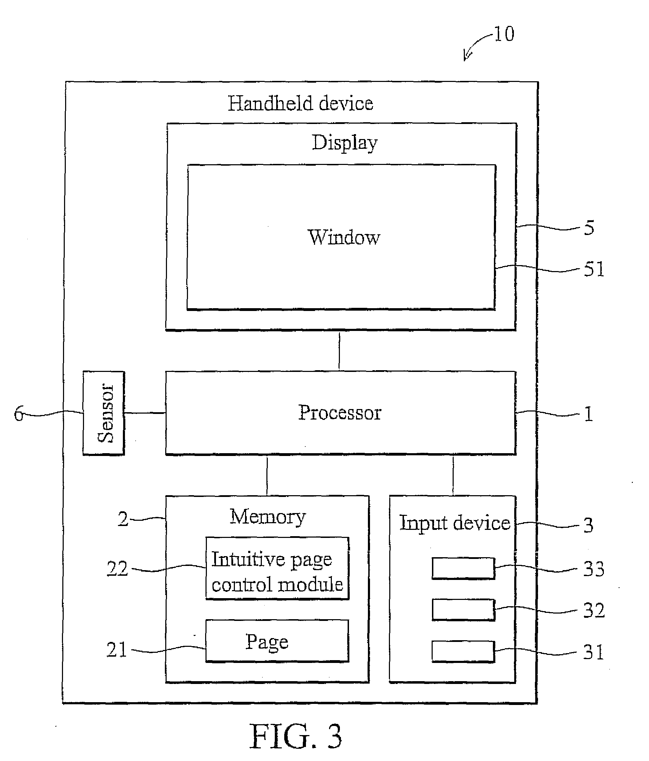

In Fig. 3, processor 1 is coupled to memory 2, input device 3, display 5, and sensor 6. Memory 2 may store various pages comprising text, images, web information, or other data. The following items are described on page 21. Handheld device 10 may provide conventional page-control functions and an intuitive page-control mode that may be switched on/off by an input devices interface such as button 31. When handheld device 10 starts the intuitive page control mode according to the operations of button 31, processor 1 adjusts window 51 on display 5 according to displacement detected by sensor 6. Window 51 may be an area or the full screen on display 5 defined by a computer program. Adjusting window 51 involves adjusting the area, such as tweaking the location or boundary thereof relative to the selected page or to display 5. Sensor 6 can be disabled after handheld device 10 switches off the intuitive page-control mode according to input from button 31. Memory 2 may comprise intuitive page-control module 22 providing the intuitive page-control mode to various pages. Note that intuitive page-control module '22 can be implemented by computer programs (as a portion of the operating system (OS) of handheld device 10) or by circuits.

The intuitive page-control mode comprises functions of page magnification level adjustment and intuitive page shift.

Input device 3 may comprise an interface, such as buttons 32 and 33, for adjusting page magnification level to increase and decrease the page magnification level. According to the operations of buttons 32 and 33, processor 1 can adjust page views stored in memory 2 on display 5 at various magnification levels. Processor 1 displays a page in an area of display 5, such as window 51. The size of a window may be the same as or smaller than that of display 5. A window can be fixed in a location of display 5 or movable to anywhere thereon. In the following description, windows are assumed to be fixed in a position on display 5 and have the size of the full-screen of display 5.

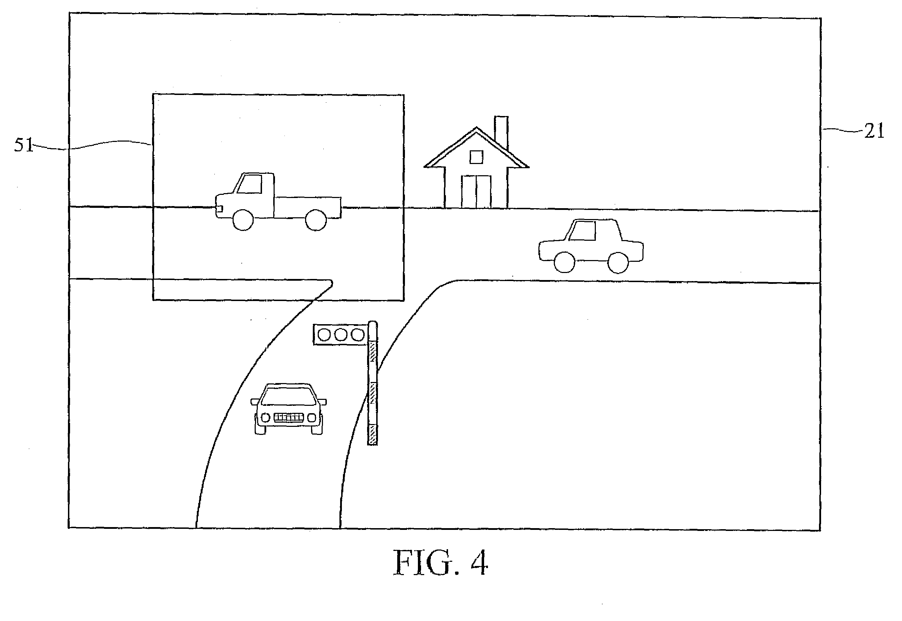

Fig. 4 is a schematic diagram of page 21 stored in memory 2. For example, display 5 shows a portion of page 21 at a proper magnification level in window 51. The virtual size of page 21 is assumed to be larger than window 51 (i.e., larger than display 5).

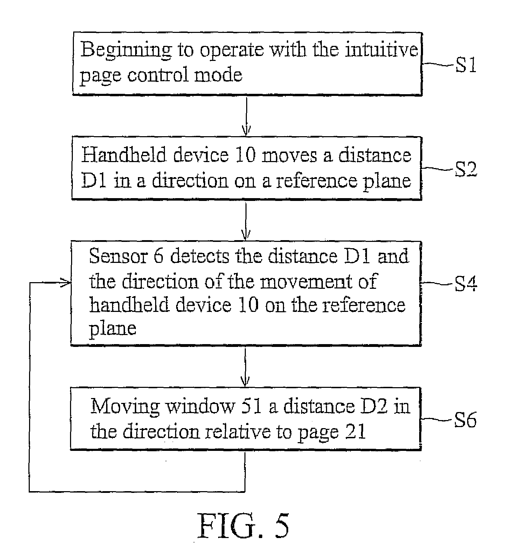

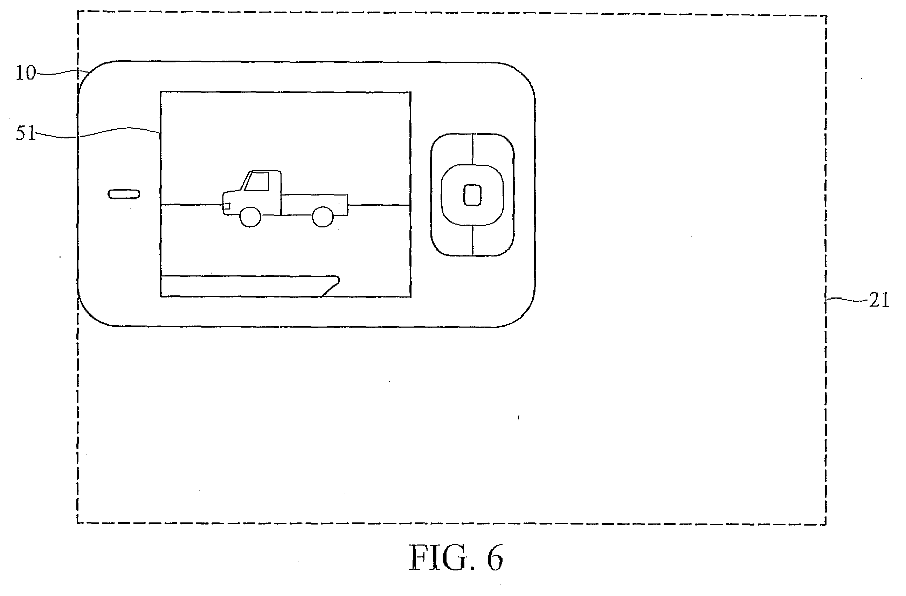

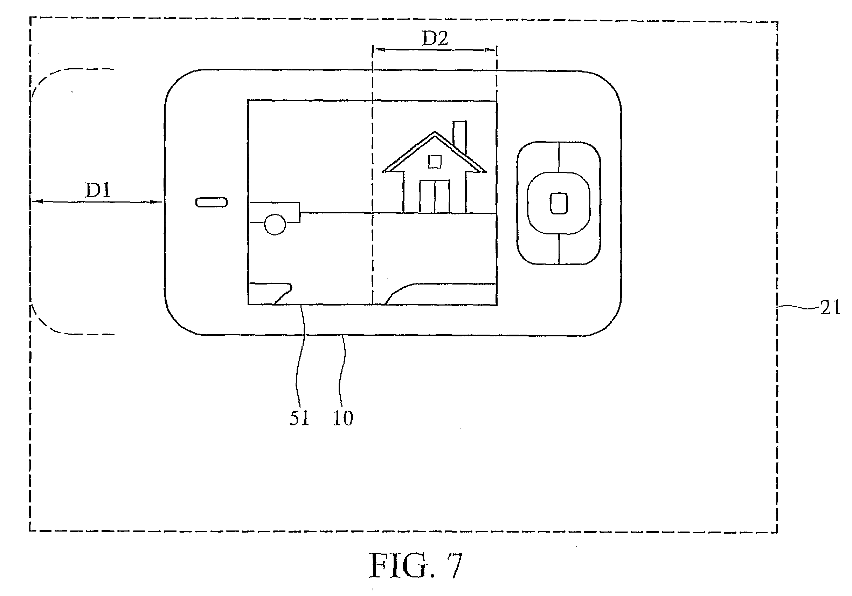

Referring to Figs. 5-8, handheld device 10 begins to operate with the intuitive page-control mode (step S1), wherein processor 1 performs the following steps utilizing intuitive page control module 22. Handheld device 10 is placed on a reference plane (such as a tabletop), as shown in Fig. 6, and moved a distance D1 in a first direction (such as right) relative to its original position on the tabletop (step S2), as shown in Fig. 7. When detecting the distance D1 in the first direction movement of handheld device 10 relative to its original position on the tabletop utilizing sensor 6 (step S4), processor 1 accordingly moves page 21 a distance D2 in the opposite direction thereof (such as left) relative to window 51, causing window 51 to move (or scroll) the distance D2 in the first direction (such as right) relative to page 21 (step S6). Window 51 and display 5 have no relative motion in the example, but are not limited thereto. Thus, page 21 moves the distance D2 in the opposite direction (such as left) relative to display 5, wherein the distance D2 may be in proportion to or substantially equal to the distance D1. In other words, the first direction movement of window 51 simulates the first direction movement of handheld device 10. Note that the distance D2 may be any desired proportion of the distance D1.

For example, if 20 pixels of display 5 comprise a length of 1 cm, handheld device 10 can adopt the proportion, 20 (pixels): 1 (cm), as the ratio of the movement of window 51 to the movement of handheld device 10. When handheld device 10 is detected moving 1 cm in any direction, processor 1 accordingly moves window 51 20 pixels in the direction relative to page 21. Similarly, when detecting handheld device 10 moving 0.1 cm in a direction, processor 1 accordingly moves window 51 2 pixels 5 in the direction relative to page 21. When the proportion of the movement of window 51 to the movement of handheld device 10 is determined, processor 1 moves window 51 in response to the movement of handheld device 10 based on the proportion. If page 21 contains a bitmapped image, pixels thereof may be adopted as a distance unit in movement of window 51, wherein the proportion of the movement of window 51 to the movement of handheld device 10 may vary with the magnification level of page 21.

When receiving signals for adjustment of magnification level, processor 1 modifies the magnification level of page 21 based on the signals. If the magnification level of page 21 is modified, processor 1 preserves the original proportion of the movement of window 51 to the movement of handheld device 10 or accordingly changes the proportion based on the signals.

Step S4 is performed after step S6, and steps S4~S6 are repeated. The more rapidly the repetition of steps S4~S6, the smoother the intuitive page-shift operations.

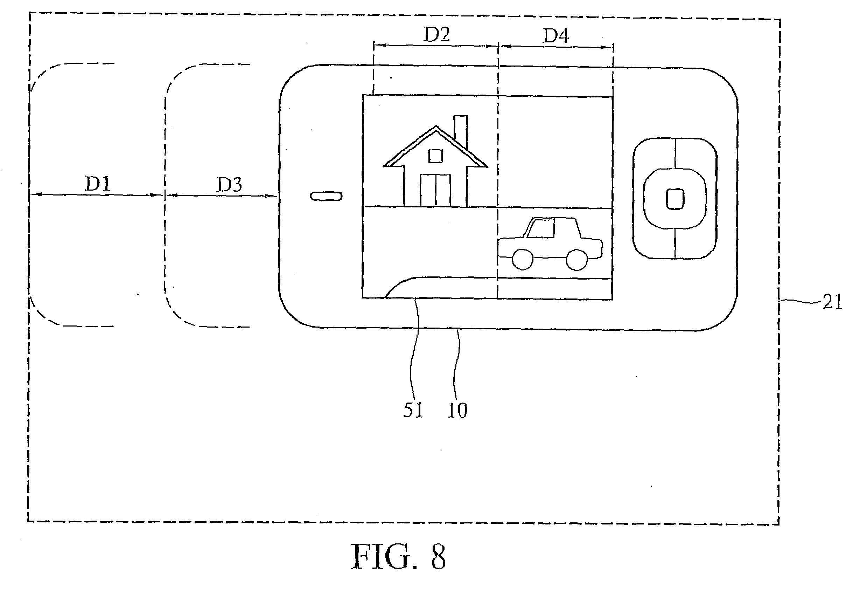

As shown in Fig. 8, handheld device 10 is successively moved a distance D3 to the right from its previous position on the tabletop. Upon detecting the distance D3 in the direction movement of handheld device 10 relative to its previous position on the tabletop utilising sensor 6, processor 1 moves page 21 a distance D4 in the opposite direction (i.e., left) relative to window 51 according to the detected distance D3 and direction, causing window 51 to move the distance D4 to the right relative to page 21.

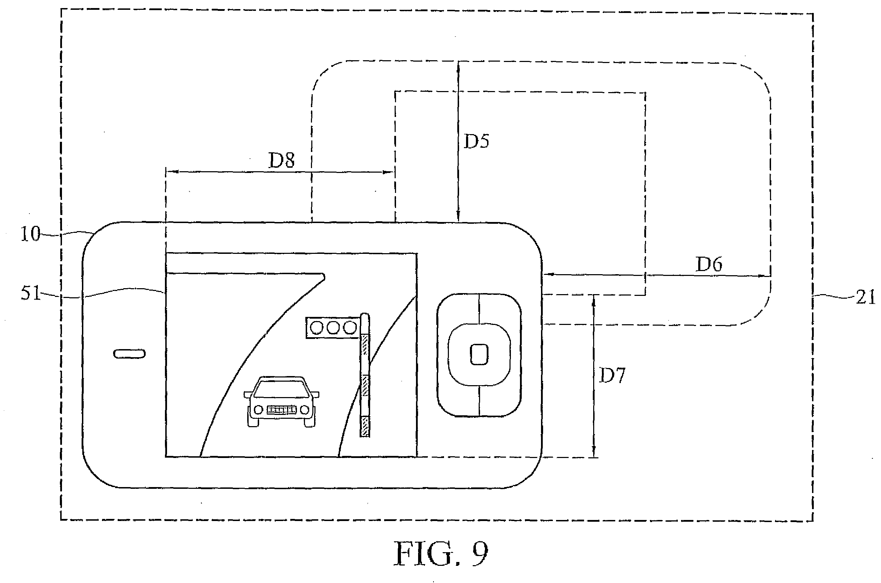

As shown in Fig. 9, handheld device 10 is successively moved a distance D5 to the left and a distance D6 downward from its previous position on the tabletop. Upon detecting the distances D5 and D6 and the directions thereof, processor 1 moves page 21 a distance D7 upward and a distance D8 to the right relative to window 51 (and/or display 5) according to the detected distances D5 and D6 and the directions thereof, causing window 51 to move the distance D7 downward and the distance D8 to the left relative to page 21.

Handheld device 10 repeats steps S4~S6 until switching off the intuitive page-control mode and terminating intuitive page-shift operations by input device 3 (such as button 31).

Although sensor 6 is described as an optical or mechanical sensor in the previous examples, it can be implemented by other sensors, such as gyroscopes or gyro sensors. For example, sensor 6 may comprise two pairs of gyroscope and gyro sensors, respectively detecting movement of handheld device 10 in two directions without the reference plane.

Thus, the exemplary embodiment of the handheld device adjusts displayed content according to the movement of itself, providing more intuitive page control.

While the invention has been described by way of example and in terms of preferred embodiment, it is to be understood that the invention is not limited thereto. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A handheld device, comprising:
a cover;
a memory located in the cover, storing a page;
a display disposed on the cover, displaying the page in a window;
a sensor located on the cover, detecting a distance and a direction of movement of the handheld device on a reference plane; and
a processor located in the cover and coupled to the memory, the display, and the sensor, moving the window in the direction relative to the page when the sensor detects the handheld device moving in the direction on the reference plane.

2. The device as claimed in claim 1, wherein the display and the sensor are disposed in different areas of the cover.

3. The device as claimed in claim 2, wherein the display and the sensor are disposed on an opposite surface areas of the cover.

4. The device as claimed in claim 1, wherein the distance the window moves in the direction relative to the page is in proportion to the detected distance the handheld device moves in the direction on the reference plane.

5. The device as claimed in claim 4, wherein the distance the window moves in the direction relative to the page is substantially equal to the detected distance the handheld device moves in the direction on the reference plane.

6. The device as claimed in claim 1, wherein the sensor is an optical sensor.

7. The device as claimed in claim 1, wherein the sensor is a mechanical sensor.

8. The device as claimed in claim 1, further comprising a first input button adjusting the magnification level of the display.

9. The device as claimed in claim 1, further comprising a second input button implementing an intuitive navigation mode in which the processor moves the window according to the distance and direction of movement of the handheld device detected by the sensor.

10. A handheld device, comprising:
a cover;
a display disposed on a first surface area of the cover;
a sensor positioned on a second surface area of the cover in opposition to the first surface area, detecting displacement of the handheld device on a reference plane; and
a processor located in the cover and coupled to the display and the sensor, changing the content displayed on the display according to the displacement of the handheld device detected by the sensor.

11. The device as claimed in claim 10, wherein the sensor is an optical sensor.

12. The device as claimed in claim 10, wherein the sensor is a mechanical sensor.

13. A device as claimed in claim 10, further comprising a memory coupled to the processor, wherein the content shown on the display comprises data stored in the memory.

14. The device as claimed in claim 10, further comprising a second input button implementing an intuitive navigation mode in which the processor changes the content displayed on the display according to the displacement of the handheld device detected by the sensor.
